(19) Europäisches Patentamt
European Patent Office
Office européen des brevets

(11) **EP 1 357 393 B1**

(12) **EUROPÄISCHE PATENTSCHRIFT**

(45) Veröffentlichungstag und Bekanntmachung des Hinweises auf die Patenterteilung:
**02.10.2013  Patentblatt 2013/40**

(51) Int Cl.:
**G01S 3/783** *(2006.01)*     *G01S 3/784* *(2006.01)*

(21) Anmeldenummer: **03009110.2**

(22) Anmeldetag: **19.04.2003**

(54) **Vorrichtung zur Ermittlung des Einfallwinkels einer Strahlung auf eine Strahlungseinfallfläche**

Device for the determination of the angle of incidence of radiation on a radiation incidence area

Dispositif pour la détermination de l'angle d'incidence de rayonnement sur un secteur d'incidence de rayonnement

(84) Benannte Vertragsstaaten:
**AT BE BG CH CY CZ DE DK EE ES FI FR GB GR HU IE IT LI LU MC NL PT RO SE SI SK TR**

(30) Priorität: **23.04.2002  DE 10218160**

(43) Veröffentlichungstag der Anmeldung:
**29.10.2003  Patentblatt 2003/44**

(73) Patentinhaber: **ELMOS Semiconductor AG**
**44227 Dortmund (DE)**

(72) Erfinder:
• **Müsch, Erhard**
**59368 Werne (DE)**

• **Budde, Wolfram**
**46487 Wesel (DE)**

(74) Vertreter: **von Kreisler Selting Werner**
**Deichmannhaus am Dom**
**Bahnhofsvorplatz 1**
**50667 Köln (DE)**

(56) Entgegenhaltungen:
**EP-A- 0 747 719     EP-A- 0 982 600**
**EP-A- 1 189 072     WO-A- 01/48504**
**US-A- 5 264 910**

**Beschreibung**

Die Erfindung betrifft eine Vorrichtung zur Ermittlung des Einfallwinkels einer Strahlung auf eine Strahlungseinfallfläche.

Bei einer Vielzahl von Anwendungsfällen ist es zweckmäßig, den Einfallwinkel einer Strahlung messtechnisch ermitteln zu können. So werden beispielsweise in Kfz-Klimaanlagen Sonnensensoren eingesetzt, die die Intensität und die Richtung, aus der die Sonnenstrahlung auf das Fahrzeug auftrifft, ermitteln.

Sonnensensoren für Kraftfahrzeuge weisen im allgemeinen eine nicht unerhebliche Bauhöhe auf, um die sie aus dem Armaturenbrett vorstehen. Dies wird als optisch störend empfunden.

Aus DE 41 22 707 A1 und EP-A-0 747 719 A1 ist jeweils eine Vorrichtung zur Detektion des Einfallwinkels von Strahlung bekannt, bei denen in einer ersten Ebene mehrere Paare von Photodioden und in einer zweiten Ebene oberhalb der Photodiode eine Abschattungsmaske mit für die Strahlung durchlässigen und undurchlässigen Bereichen angeordnet sind. Die durchlässigen Bereiche der Abschattungsmaske sind für jedes Photodiodenpaar um das gleiche Ausmaß versetzt angeordnet. Je nach dem Einfallswinkel der Strahlung gelangt auf die Photodioden mehr oder weniger Strahlung, so dass das Messsignal ein Maß für den Einfallswinkel ist. Ähnliche Vorrichtungen sind auch in DE 198 38 460 A1 und DE 100 46 785 A1 beschrieben.

Als in gewisser Weise nachteilig bei den bekannten Vorrichtungen ist der Umstand anzusehen, dass der Einfallswinkel analog, d.h. anhand der Größe des Messsignals ermittelt werden muss. Für die Auswertung und nachfolgende Verarbeitung des Messsignals wären Messergebnisse in digitaler Form wesentlich vorteilhafter.

In WO-A-01/48504 ist ein optoelektronischer Detektor zur Erfassung einer Strahlungseinfallrichtung beschrieben. Der bekannte Detektor weist eine Strahlungsdetektionsfläche mit einer für die Strahlung undurchlässigen Abschattungsmaske auf.

Eine Aufgabe der Erfindung ist es, eine Vorrichtung zur Ermittlung des Einfallwinkels einer Strahlung auf eine Strahlungseinfallfläche zu schaffen, die eine recht flache Struktur aufweist und sich somit in für den Betrachter einsehbare Flächen integrieren lässt.

Zur Lösung dieser Aufgabe wird mit der Erfindung eine Vorrichtung zur Ermittlung des Einfallwinkels einer Strahlung auf eine Strahlungseinfallfläche vorgeschlagen, wobei die Vorrichtung versehen ist mit den Merkmalen des Anspruchs 1.

Nach der Erfindung ist vorgesehen, dass mehrere erste Photodioden entlang einer ersten Achse nebeneinander liegend angeordnet sind. Jeweils zwei benachbarte erste Photodioden sind zu einem ersten Photodiodenpaar zusammengefasst. Mindestens zwei derartige erste Photodiodenpaare existieren. Für jedes erste Photodiodenpaar gilt, dass die Kathode der einen ersten Photodiode mit der Anode der anderen ersten Photodiode elektrisch verbunden ist.

Jede erste Photodiode weist eine Raumladungszone auf, die der einfallenden Strahlung ausgesetzt ist. Oberhalb der Raumladungszonenflächen der ersten Photodioden befindet sich eine Abschattungsmaske, die mit Abstand zu den ersten Photodioden angeordnet ist. Diese Abschattungsmaske weist entlang der ersten Achse nebeneinander liegende strahlungsdurchlässige Bereiche auf, die von strahlungsundurchlässigen Bereichen getrennt sind. Jeder strahlungsdurchlässige Bereich ist den Raumladungszonenflächen eines ersten Photodiodenpaares zugeordnet. Die Anordnung der strahlungsdurchlässigen Bereiche ist nun derart gewählt, dass die strahlungsdurchlässigen Bereiche gegenüber den ihnen zugeordneten Raumladungszonenflächen unterschiedlich stark versetzt angeordnet sind. Mit anderen Worten ist also bei Betrachtung in Richtung der Normalen der Strahlungseinfallfläche der Grad an Überdeckung zwischen einem strahlungsdurchlässigen Bereich mit den diesem zugeordneten Raumladungszonenflächen in Richtung der ersten Achse für mindestens zwei der ersten Photodiodenpaare unterschiedlich.

Fällt nun Strahlung auf die Abschattungsmaske, so lassen deren strahlungsdurchlässige Bereiche Strahlung bis zu den Raumladungszonenflächen der einzelnen ersten Photodiodenpaare durch. Innerhalb eines durch die Geometrie der strahlungsdurchlässigen Bereiche, der Raumladungszonenflächen und des Abstandes der Abschattungsmaske von den Raumladungszonenflächen bestimmten Strahlungseinfallwinkelbereichs sind die Raumladungszonenflächen eines der ersten Photodiodenpaare im wesentlichen gleich stark der Strahlung ausgesetzt. Dies kann messtechnisch erfasst werden, indem beispielsweise die Spannung am Verbindungspunkt der beiden Photodioden jedes ersten Photodiodenpaars mit der Versorgungsspannung der Photodiodenpaare verglichen wird. Ist die Spannung bzw. das Potential am Verbindungspunkt in etwa gleich der Hälfte des Vorsorgungspotentials, so bedeutet dies, dass die Raumladungszonenflächen dieses ersten Photodiodenpaars gleichmäßig der Strahlung ausgesetzt ist. In einer Tabelle oder einem anderweitigen Speicher kann dann abgelesen werden, welchem Strahlungseinfallwinkel dies entspricht. Dieser Strahlungseinfallwinkel ist nämlich unter anderem von dem Versatz des strahlungsdurchlässigen Bereichs der Abschattungsmaske abhängig, der den Raumladungszonenflächen des betreffenden ersten Photodiodenpaares zugeordnet ist. Ferner geht in die Berechnung auch der Abstand der Abschattungsmaske von den Photodioden ein. Insoweit kann man also für jedes Photodiodenpaar denjenigen Einfallwinkel zuordnen, unter dem die Strahlung einfällt, wenn das Verbindungspunktpotential beispielsweise die Hälfte des Versorgungspotentials beträgt. Auf diese Weise ist der Einfallwinkel direkt digital bestimmbar, und zwar anhand eines Größer-Kleiner-Vergleichs der Photoströme (wenn an die Photodioden eine Versorgungsspannung angelegt wird, die Photodioden also als passive Elemente betrieben werden) bzw. Photospannungen (wenn die Photodioden als aktive Bauelemente betrieben werden, die eine Photospannung erzeugen, wenn auf sie Strahlung eintrifft) der Photodioden jedes Photodiodenpaares bzw. des Vergleichs der Verbindungspunktpotentiale jedes Photodiodenpaares.

Anstelle der halben Versorgungsspannung kann man beispielsweise auch das Potential des Verbindungspunktes mit jedem anderen Bruchteil des Versorgungspotentials vergleichen. Auf Grund der geometrischen Anordnung (Versätze parallel und senkrecht zu den Raumladungszonenflächen der Photodioden) ist stets eine Aussage über den Einfallwinkel der Strahlung möglich.

Die zuvor beschriebenen Auswertungen werden in einer Auswerteeinheit der erfindungsgemäßen Vorrichtung durchgeführt. Ganz allgemein gesprochen wird dabei die Veränderung des Verbindungspotentials von erstem Photodiodenpaar zu erstem Photodiodenpaar digital untersucht, um den Einfallwinkel zu ermitteln, unter dem die parallel zur ersten Achse gerichtete Komponente der Strahlung auf die Strahlungseinfallfläche auftrifft.

Die zuvor beschriebene lineare Anordnung lässt sich entlang zweier winklig zueinander verlaufender erster und zweiter Achsen anordnen, die insbesondere orthogonal zueinander sind. Damit ist es dann möglich, den Einfall-Raumwinkel zu ermitteln, unter dem die Strahlung auf die Strahlungseinfallfläche trifft.

Der zumindest für einige der ersten Photodiodenpaare unterschiedliche (Horizontal- ) Versatz der strahlungsdurchlässigen Bereiche der Abschattungsmaske gegenüber den Raumladungszonenflächen der ersten Photodiodenpaare wird zweckmäßigerweise dadurch realisiert, dass der Mittenabstand der strahlungsdurchlässigen Bereiche der Abschattungsmaske verschieden ist von dem Mittenabstand der ersten Photodiodenpaare. Hierbei ist es möglich, dass die jeweiligen Mittenversätze über die gesamte erste bzw. zweite Achse betrachtet konstant sind oder aber monoton zu- oder abnehmen oder sich in anderer Weise, insbesondere willkürlich, verändern. Ferner ist jede andere Anordnung verschiedener Positionen von strahlungsdurchlässigen Bereichen der Abschattungsmaske zu den Raumladungszonenflächen der ersten bzw. zweiten Photodiodenpaare möglich. Die jeweilige Geometrie ist allerdings bei der Auswertung zu berücksichtigen, was oben bereits beschrieben worden ist.

Der Vorteil der erfindungsgemäßen Vorrichtung ist darin zu sehen, dass die Gesamtkonstruktion eine denkbar geringe Bauhöhe aufweist. Die erfindungsgemäße Vorrichtung lässt sich nämlich in die Oberfläche eines halbleitenden Substrats integrieren bzw. auf dieser aufbauen. Dabei sind die Photodioden in die Oberfläche des halbleitenden Substrats eingebracht, während die Abschattungsmaske als beispielsweise Metallisierungsschicht einer Halbleiterherstellungstechnologie durch ein Dielektrikum (beispielsweise Siliziumoxid) von der Oberfläche des halbleitenden Substrats beabstandet angeordnet ist. Insbesondere eignet sich ein SOI-Substrat, das eine im wesentlichen parallel zur Oberfläche verlaufende horizontale Isolationsschicht sowie mit dieser verbundene vertikale Isolationsgräben aufweist. Hierdurch entstehen einzelne elektrisch voneinander isolierte Inseln, in denen die Photodioden bzw. die Photodiodenpaare angeordnet werden können. Andere Substrate sind selbstverständlich ebenfalls denkbar. So könnten die isolierten Inseln auch z. B. durch Wannen-Technologien realisiert werden, bei denen die Photodioden bzw. Photodiodenpaare in einzelnen in die Oberfläche des Substrats ausgebildete auch voneinander isolierte Wannen eingebracht sind. Alternativ zur integrierten Bauweise ist auch ein diskreter Aufbau denkbar.

Bereits oben wurde darauf hingewiesen, dass man mit der erfindungsgemäßen linearen Anordnung von paarweise miteinander verschalteten Photodioden den Raumwinkel der einfallenden Strahlung ermitteln kann. In einer ersten Variante ist eine derartige Anordnung so aufgebaut, dass jeweils ein erstes und ein zweites Photodiodenpaar einem gemeinsamen lichtdurchlässigen Bereich der Abschattungsmaske zugeordnet sind. Beispielsweise handelt es sich bei den strahlungsdurchlässigen Bereichen um Rechtecke, deren jeweils paarweise einander gegenüberliegende Kanten jeweils einem der beiden Photodiodenpaare, nämlich dem ersten oder dem zweiten Photodiodenpaar, zugeordnet sind. Zweckmäßigerweise wird in jeder der vier durch die Diagonalen des strahlungsdurchlässigen Bereichs definierten Teilbereiche jeweils eine Photodiode angeordnet. Hierdurch entsteht eine Photodioden-Array-Struktur mit einer Gitter-Abschattungsmaske.

Die Abdeckung der Abschattungsmaske z.B. zum Schutz gegen Beschädigungen erfolgt beispielsweise, wie in der Halbleitertechnologie grundsätzlich bekannt, durch eine optisch "dichte" Passivierungsschicht. Auf diese Schicht wird ein Kunststoffmaterial aufgebracht, wie es z.B. von optischen Elementen bzw. Bauteilen in der Photo-Elektronik bekannt ist. Das aus dem optisch dünneren Medium, nämlich der Umgebung, d.h. Luft, auf die Kunststoffschicht auftreffende Sonnenlicht wird in dieser zur Normalen hin gebrochen, so dass auch bei flachem Sonnenlichteinfall der maximal zulässige Einfallwinkel nicht erreicht wird, weshalb der erfindungsgemäße Sensor in seiner Anwendung als Sonnensensor den Einfall der Strahlung nahezu im gesamten Halbraum (0° - 180°) erfassen und detektieren kann.

Die Erfindung wird nachfolgend anhand der Zeichnung näher erläutert. Dabei zeigen im einzelnen:

Fig. 1    die erfindungsgemäße Anordnung im Querschnitt sowie für den Fall, dass die Strahlung in einem detektierbaren ersten Winkel auftrifft,

Fig. 2    die erfindungsgemäße Anordnung im Querschnitt sowie für den Fall, dass die Strahlung in einem detektierbaren zweiten Winkel auftrifft,

Fig. 3 eine Draufsicht auf die Anordnung gemäß Fig. 1 bzw. Fig. 2,

Fig. 4 eine schematische teilweise auf Blockschaltbildebene dargestellte Schaltung zur Auswertung der Photodiodenpotentiale zur Ermittlung des Strahlungseinfallwinkels und

Fig. 5 eine Draufsicht auf eine zweidimensionale Anordnung zur Ermittlung des Einfallraumwinkels einer beispielsweise Sonnenstrahlung o.dgl.

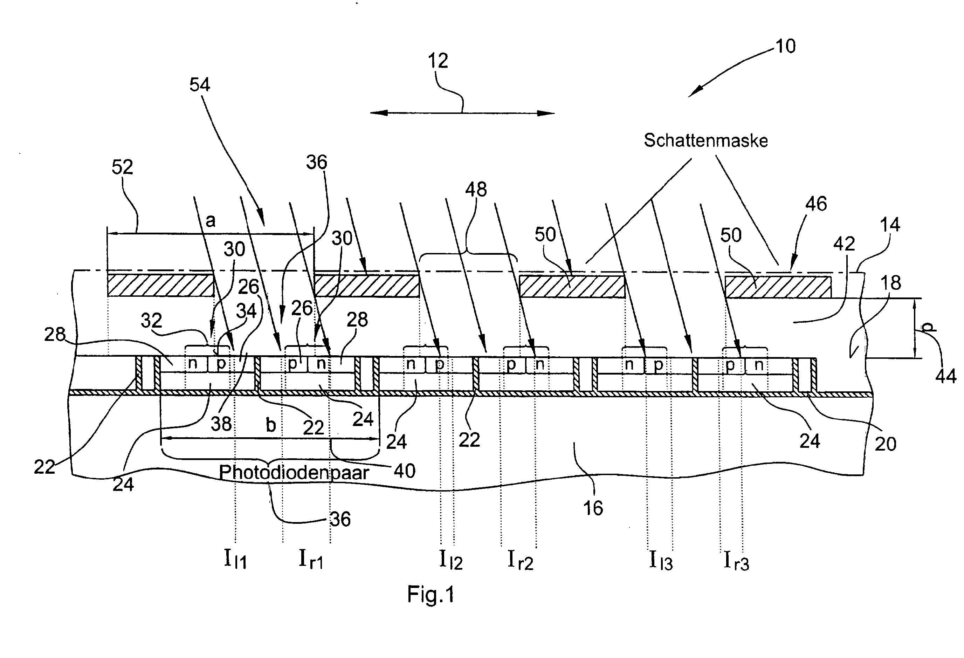

Fign. 1 bis 3 zeigen den grundsätzlichen Aufbau einer Vorrichtung 10 zur Ermittlung des Einfallwinkels derjenigen Komponente einer Strahlung, die entlang der durch den Doppelpfeil 12 angedeuteten Achse auf eine Strahlungseinfallfläche 14 auftrifft. Die Vorrichtung 10 weist ein Halbleitersubstrat 16 auf, das in diesem Fall als SOI-Substrat ausgebildet ist und eine unterhalb der Oberfläche 18 des Substrats 16 verlaufende horizontale Isolationsschicht 20 aufweist. In die Oberfläche 18 des Substrats 16 sind vertikale Isolationsgräben 22 eingebracht, wodurch sich in der Oberfläche 18 des Substrats 16 einzelne dielektrisch voneinander isolierte Bereiche 24 bilden. In jedem dieser Bereiche 24 ist ein p-dotiertes Gebiet 26 und ein n-dotiertes Gebiet 28 einer Photodiode 30 eingebracht. Jede Photodiode 30 weist eine Raumladungszone 32 mit einer in der Oberfläche 18 des Substrats 16 liegenden Raumladungszonenfläche 34 auf.

Zwei jeweils benachbarte Photodioden 30 sind zu einem Photodiodenpaar 36 miteinander verschaltet (nicht dargestellt). Die p- und n-Gebiete 26,28 der Photodioden 30 jedes Photodiodenpaares 36 sind symmetrisch zum zwischen den Photodioden 30 angeordneten Isolationsgraben 22, wobei die Dotierstoffkonzentrationen der p-Gebiete 26 im Vergleich zu den n-Gebieten 28 gleich oder unterschiedlich und die p- oder die n-Gebiete 26,28 jeweils untereinander gleich stark dotiert sind. Der Abstand benachbarter Photodiodenpaare 36 ist in diesem Fall für sämtliche Photodiodenpaare 36 konstant und in Fig. 1 bei 40 eingezeichnet.

Auf der Oberfläche 18 des Substrats 16 befindet sich eine lichtdurchlässige (Isolations- ) Schicht 42, die eine bei 44 eingezeichnete Höhe aufweist. Auf dieser Schicht 42 befindet sich eine Abschattungsmaske 46 mit lichtdurchlässigen Bereichen 48 und lichtundurchlässigen Bereichen 50. Jeder lichtdurchlässige Bereich 48 ist den Raumladungszonenflächen 34 eines Photodiodenpaares 36 zugeordnet. Dabei gilt, dass der (Mitten- ) Abstand 52 benachbarter lichtdurchlässiger Bereiche 48 der Abschattungsmaske 46 verschieden (in diesem Ausführungsbeispiel kleiner) als der Abstand 40 benachbarter Photodiodenpaare 36 ist.

Durch diese geometrische Anordnung verändert sich die Lage jedes lichtdurchlässigen Bereichs 48 der Abschattungsmaske 46 relativ zu dem jeweils zugeordneten Photodiodenpaar 36. Die einfallende Strahlung 54 trifft also in Abhängigkeit von der jeweiligen Relativlage von strahlungsdurchlässigem Bereich 48 und Photodiodenpaar 36 mehr oder weniger stark auf eine oder beide Raumladungszonen 32 auf. Damit werden in den beiden Photodioden 30 jedes Photodiodenpaars 36 mehr oder weniger starke Photodiodenströme $I_{li}$ und $I_{ri}$ generiert, wobei I für die in den Figuren linke Photodiode eines Photodiodenpaars, r für die rechte Photodiode steht und i = 1 bis Anzahl der Photodiodenpaars ist.

In dem Beispiel gemäß Fig. 1 gilt:

$$I_{l1} < I_{r1}, \; I_{l2} < I_{r2}, \; I_{l3} > I_{r3}.$$

Der Winkel, unter dem die Strahlung einfällt, liegt also zwischen denjenigen (Grenz- ) Winkeln, die durch die Relativlage, d. h. den Versatz der in Fig. 1 in der Mitte und rechts eingezeichneten Photodiodenpaare 36 zur den diesen Photodiodenpaaren 36 zugeordneten lichtdurchlässigen Bereichen 48 der Abschattungsmaske 46 bestimmt ist; denn für diese beiden Photodiodenpaare gilt, dass der Vergleich der linken und rechten Photoströme von kleiner als auf größer als (oder umgekehrt) wechselt.

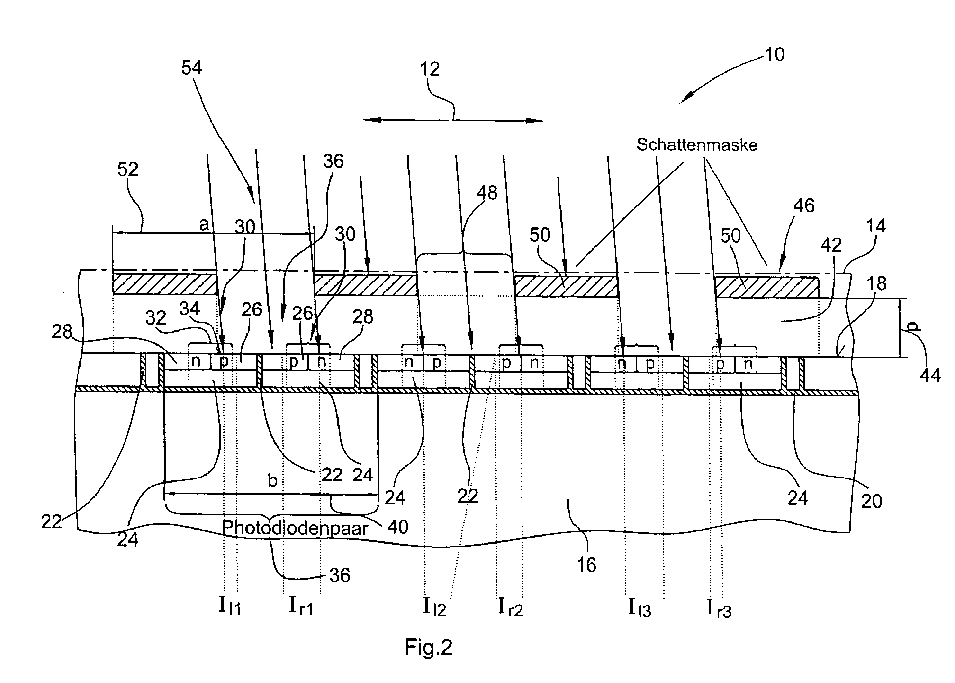

Für den Fall gemäß Fig. 2 gilt:

$$I_{l1} < I_{r1}, \; I_{l2} = I_{r2}, \; I_{l3} > I_{r3}.$$

Das bedeutet, dass der Winkel durch die Geometrie der Vorrichtung 10 im Bereich des in den Figuren mittleren Photodiodenpaares 36 also durch den Relativversatz vom lichtdurchlässigen Bereich zum Photodiodenpaar bestimmt ist. Werden die Photodioden 30 dieses mittleren Photodiodenpaares 36 gleichmäßig mit einfallender Strahlung versorgt, so muss diese Strahlung nahezu senkrecht auf die Strahlungseinfallfläche 14 auftreffen, was sich beispielsweise auch aus Fig. 2 ergibt. Es kann also durch digitale Auswertung eine Aussage über den Strahlungseinfallwinkel getroffen werden.

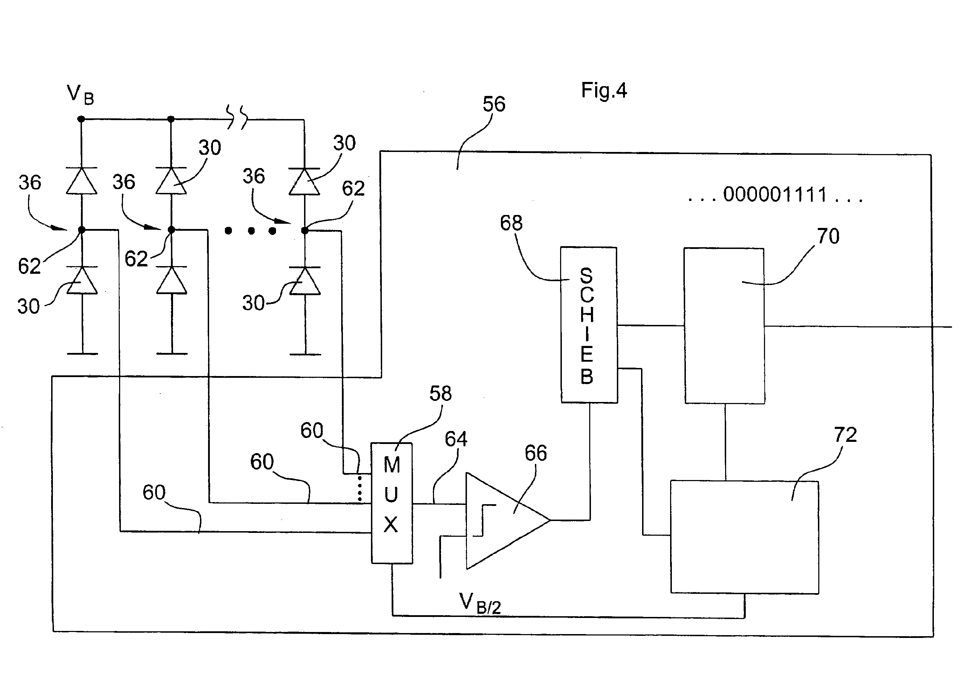

Fig. 4 zeigt den Aufbau einer Auswerteeinheit 56 zur Ermittlung des Einfallwinkels der auftreffenden Strahlung. Diese Auswerteeinheit 56 ist in diesem Ausführungsbeispiel mit einem n- auf- 1- Multiplexer 58 versehen, dessen n- Eingänge 60 mit den Verbindungspunkten 62 der Photodioden 30 der Photodiodenpaare 36 verbunden sind. Der Ausgang 64 des Multiplexers 58 ist mit einem Komparator 66 verbunden, der dies jeweilige Potential am Verbindungspunkt 62 mit dem halben Versorgungspotential VB/ 2 der Versorgungsspannung VB der Photodiodenpaare 36 vergleicht. Für jedes Photodiodenpaar 36 wird nun dieser Vergleich durchgeführt und am Ausgang des Komparators 66 entsteht dann eine Folge von den Photodiodenpaaren eindeutig zugeordneten Nullen und Einsen, die in einem Schieberegister 68 abgelegt werden. Dieses Schieberegister 68 wird ausgelesen, wobei der Übergang von Null auf Eins der Sequenz aus Nullen und Einsen detektiert wird. Damit ist nun bekannt, bei welchem der Photodiodenpaare der Übergang von Null auf Eins erfolgt. Daraus aber wiederum kann man ermitteln, unter welchem Winkel die Strahlung einfällt, und zwar sowohl für- bezogen auf die Figuren- Strahlungseinfall von links als auch von rechts. Aus einer Tabelle 70 wird dann der Strahlungseinfallwinkel ausgelesen. Die Tabelle 70, das Schieberegister 68 und der Multiplexer 58 werden von einer zentralen Steuereinheit 72 gesteuert.

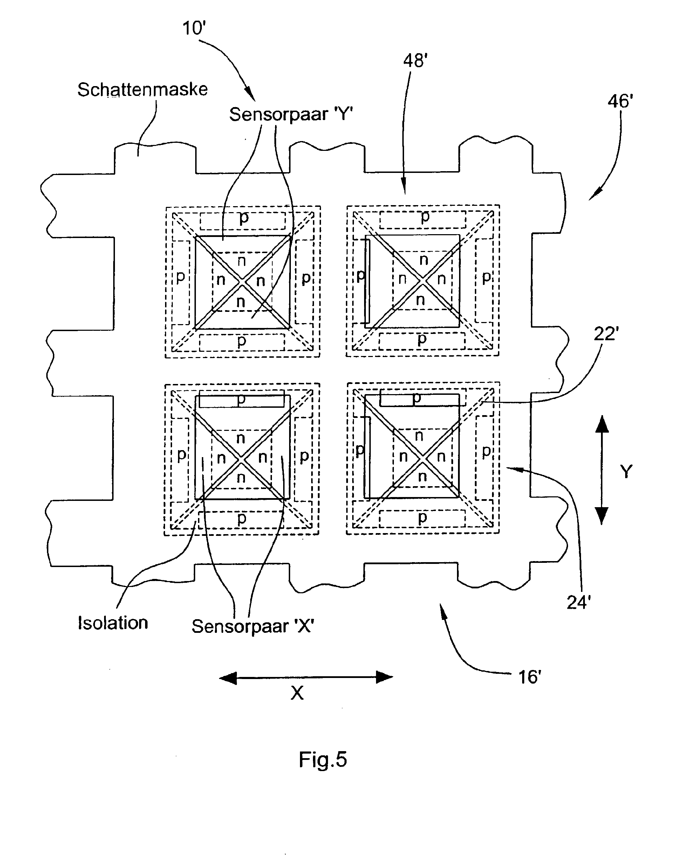

Abschließend soll noch kurz anhand von Fig. 5 gezeigt werden, wie die Vorrichtung 10' für den Fall aufgebaut ist, dass der Raumwinkel der einfallenden Strahlung ermittelt werden soll. In diesem Fall ist die Abschattungsmaske 46' als Gittermaske ausgeführt. In dem Substrat 16' sind in diesem Fall quadratische Bereiche definiert, die durch vertikale längs der Diagonalen verlaufende Isolationsgräben 22' voneinander isoliert sind. In den vier so entstehenden Bereichen 24' sind die einzelnen Photodioden ausgebildet, und zwar zwei Photodioden für die y-Richtung und zwei Photodioden für die x-Richtung. Die Auswertung in jeder Richtung erfolgt wie zuvor anhand der Fign. 1 bis 4 beschrieben. Der Versatz der lichtdurchlässigen Bereiche 48' der Abschattungsmaske 46' ist entsprechend gewählt, so dass diese Bereiche 48' sowohl in x-als auch in y-Richtung gegenüber den Abständen der y-Photodiodenpaare und der x-Photodiodenpaare jeweils unterschiedlich sind.

Der Aufbau, die Funktionsweise und die Auswertung der erfindungsgemäßen Vorrichtung lassen sich also wie folgt zusammenfassend darstellen.

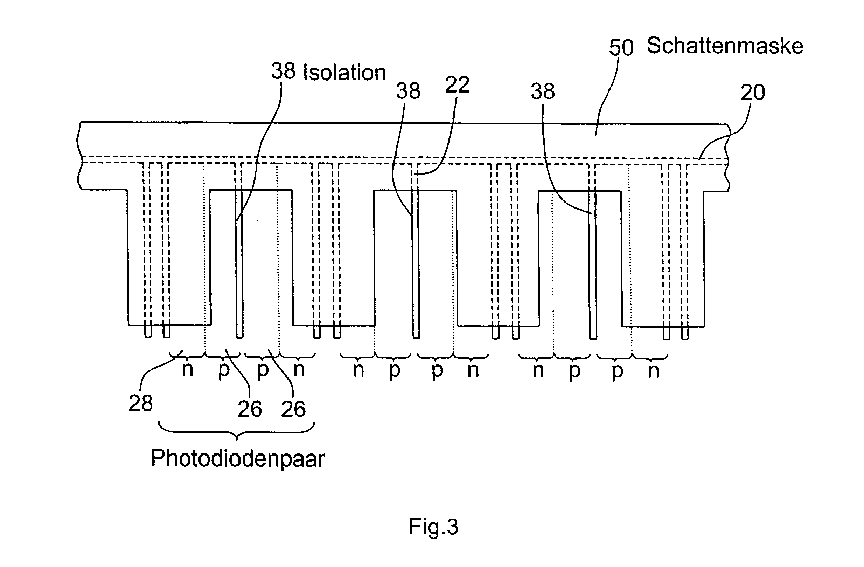

Aufbau (Fign. 1, 3)

Eine Anzahl von integrierten Photosensor-Paaren, bestehend aus p-n-Übergängen in einem Halbleiter, befindet sich unterhalb einer Schattenmaske, gebildet z.B. durch eine Metallisierungsschicht. Die einzelnen Photosensoren können vorteilhaft zur Erhöhung der Effizienz der Auswertung horizontal gegeneinander durch eine Isolationsschicht "IH" und für eine möglichst einfache Signalauswertung vertikal gegenüber dem gemeinsamen Substrat durch eine Schicht "IV" isoliert sein, wie z.B. in einer SOI-Technik realisierbar (Fig. 1). Auch eine Isolation durch weitere p-n-Übergänge (z.B. Wannengebiete) ist möglich.

Der Abstand "a" der Öffnungen in der Schattenmaske unterscheidet sich vom Abstand "b" der Sensorpaare (Fig. 1). Die Abstände "a" und "b" können jeweils konstant, aber auch variabel gewählt werden, wobei jedoch entweder die Bedingung a > b oder b > a einzuhalten sind (siehe auch Anmerkung 1).

Dabei ergibt sich unter jeder Öffnung der Schattenmaske eine etwas andere Lage des Sensorpaares als bei den linken und/oder rechten Nachbarn.

Funktion (Fig. 2)

Je nach Einfallwinkel des Lichts und der Position des Sensorpaares unter der Öffnung in der Schattenmaske wird der "linke" oder der "rechte" Sensor, genauer dessen Raumladungszone, stärker vom Lichteinfall getroffen. Der induzierte Photostrom der beiden Dioden jedes Sensorpaares wird verglichen und daraus bestimmt, welche der beiden Dioden stärker dem Licht ausgesetzt ist. In Fig. 2 ist dies dargestellt. Die Größen $I_{l1}, I_{r1} ... I_{l3}, I_{r3}$ sind die jeweils beleuchteten Bereiche der Raumladungszonen der "linken" und "rechten" Dioden eines Sensorpaares. In dieser Darstellung gilt:

$$I_{l1} < I_{r1}, \; I_{l2} = I_{r2}, \; I_{l3} > I_{r3}$$

Durch den schrittweisen Versatz zwischen Schattenmaske und Sensorpaaren gibt es zu jeden Einfallwinkel eine Position, bei der der größere Photostrom von der einen Seite eines Sensorpaares auf dessen andere wechselt. Diese Position ist ein Maß für den Winkel, unter dem das Licht einfällt.

Es muss sichergestellt sein, dass der Übergang des dominierenden Photostroms von der einen auf die andere Seite eines Sensorpaares erkannt wird. Wie in Fig. 2 dargestellt, erfolgt in diesem Beispiel der Übergang zwischen dem mittleren und dem rechten Sensorpaar.

Die Winkelauflösung wird bestimmt durch den Abstand "d" der Schattenmaske zur Halbleiter-Oberfläche und den Unterschied in den Step-Maßen "a" und "b" (Fig. 3).

Der größte Versatz zwischen der Öffnung in der Schattenmaske und der Mitte eines Sensorpaares bestimmt den maximalen Einfallwinkel.

Die Stegbreite der Schattenmaske ist so zu wählen, dass bei maximalem Einfallwinkel nicht bereits der nächste Photosensor mit beleuchtet wird.

Anmerkungen

1. Der Aufbau muss nicht zwingend so gewählt werden, dass der Versatz zwischen Schattenmaske und Sensorpaar-Mitte monoton zu- oder abnimmt. Jede andere Anordnung verschiedener Positionen zueinander ist möglich. Die Geometrie ist lediglich bei der Auswertung zu berücksichtigen.

2. Beim Aufbau der Photosensoren müssen nicht zwingend die höher dotierten Gebiete außen liegen und ein niedriger dotiertes Gebiet einschließen. Andere Geometrien sind ebenso möglich, wie z.B. nur ein einseitiger p-n-Übergang oder ein höher dotierter Streifen in der Mitte.

3. Der Aufbau ist schließlich auch unter den Aspekten der Verhinderung einer Lichtbeugung und der Lichtbrechungseffekte zu wählen (optisch passende Materialgrenzflächen).

Auswertung (Fig. 4)

Die Auswertung erfolgt durch Vergleich der Photoströme jedes Sensorpaares. Sind die Dioden elektrisch gegeneinander isoliert, so kann im einfachsten Fall die Reihenschaltung beider Dioden an einer Spannungsreferenz VRef (z.B. der Versorgungsspannung der Anordnung) in einem Komparator mit z.B. der halben Referenzspannung verglichen werden (Fig. 4). Diese Auswertung kann für alle Sensorpaare parallel, sequenziell unter Verwendung eines Multiplexers oder als Kombination aus beidem realisiert werden. Man erhält so als Folge von "Nullen" und "Einsen" in digitalisierter Form die Information über den Einfallwinkel des Lichts.

Die Winkelauflösung lässt sich weiter erhöhen, indem das Sensorpaar nicht nur gegen eine, sondern gegen mehrere Spannungen verglichen wird.

Zweidimensionale Winkelerfassung (Fig. 5)

Durch rechtwinklige Anordnung einer zweiten Gruppe von Sensorpaaren mit zugehöriger Schattenmaske in derselben Ebene kann zweidimensional der Einfallwinkel des Lichts erfasst werden.

Anmerkung

Die Kombination der rechtwinklig zueinander angeordneten Sensorpaare ist auch durch Verwendung nur einer Schattenmaske mit quadratischen oder rechteckigen Ausschnitten möglich (Fig. 5).

Zum besseren Verständnis der Erfindung ist in den Fign. 1 bis 3 in jedem Bereich 24 jeweils ein p- und ein n-Gebiet eingezeichnet. Eine Photodiode kann aber auch dadurch gebildet werden, dass in einem normalerweise (schwach) n-dotierten Bereich 24 ein (stark) p-dotiertes Gebiet ausgebildet wird (dies ist in Fig. 5 der Fall). Insbesondere können in jedem Bereich 24 wie sich nicht kontaktierende p-dotierte Gebiete vorgesehen sein, so dass zwei hintereinander geschaltete Photodioden entstehen, ein Photodiodenpaar wird dann von den jeweils zwei Photodioden zweier Bereiche 24 gebildet. Insbesondere günstig ist es, wenn die beiden p-dotierten Gebiete eines Bereichs 24 symmetrisch, z. B. an die gegenüberliegenden Isolationsgräben 22 angrenzend, positioniert sind.

Die Erfindung wurde vorstehend anhand von Photodioden als optoelektronische Bauteile zur Detektion von Strahlung beschrieben. Selbstverständlich können auch andere optoelektronische Bauelemente wie beispielsweise Phototransistoren eingesetzt werden. Unter "Photodiode" im Sinne der Erfindung wird demzufolge insbesondere auch ein Transistor verstanden. Ferner kann die hier beschriebene Vorrichtung auch zur Ermittlung der Strahlungsintensität genutzt werden, indem die Größe des Photostroms bzw. der Photospannung ausgewertet wird.

**Patentansprüche**

1. Vorrichtung zur Ermittlung des Einfallwinkels einer Strahlung auf eine Strahlungseinfallfläche, mit

- mindestens zwei ersten Photodiodenpaaren (36) mit ersten Photodioden (30), die entlang einer ersten Achse (12) angeordnet und paarweise in Reihe geschaltet sind,
- wobei jede erste Photodiode (30) eine Raumladungszone (32) mit einer zur Strahlungseinfallfläche (14) hin weisenden Raumladungszonenfläche (34) aufweist,
- einer mit Abstand (44) oberhalb der Raumladungszonenflächen (34) der ersten Photodioden (30) angeordneten, strahlungsdurchlässige Bereiche (48) aufweisenden Abschattungsmaske (46),
- wobei jeder strahlungsdurchlässige Bereich (48) den Raumladungszonenflächen (34) der beiden ersten Photodioden (30) eines ersten Photodiodenpaares (36) zugeordnet ist und
- wobei, bei Betrachtung in Richtung der Normalen der Strahlungseinfallfläche (14), der Grad an Überdeckung zwischen einem strahlungsdurchlässigen Bereich (48) mit den diesem zugeordneten Raumladungszonenflächen (34) in Richtung der ersten Achse (12) für mindestens zwei der ersten Photodiodenpaare (36) unterschiedlich ist, und
- einer Auswerteeinheit (56), die den Photostrom und/oder die Photospannung jeder ersten Photodiode (30) jedes ersten Photodiodenpaares (36) abfragt und anhand eines Vergleichs der Photoströme und/oder der Photospannungen den Einfallwinkel ermittelt, unter dem die in der Projektion parallel zur ersten Achse (12) gerichtete Komponente der Strahlung auf die Strahlungseinfallfläche (14) auftrifft.

2. Vorrichtung nach Anspruch 1, **dadurch gekennzeichnet, dass** die Auswerteeinheit (56) das Potential an dem Verbindungspunkt (62) zwischen den ersten Photodioden (30) jedes ersten Photodiodenpaares (36) und/oder die Ströme durch die ersten Photodioden (30) jedes ersten Photodiodenpaares (36) abfragt und anhand der Veränderung des Verbindungspunktpotentials der ersten Photodiodenpaare (36) und/oder der Veränderung des Ergebnisses eines Größer-Kleiner-Vergleichs der Ströme durch die ersten Photodioden (30) jedes Photodiodenpaares (36) den Einfallwinkel ermittelt, unter dem die in der Projektion parallel zur ersten Achse (12) gerichtete Komponente der Strahlung auf die Strahlungseinfallfläche (14) auftrifft.

3. Vorrichtung nach Anspruch 1 oder 2, **dadurch gekennzeichnet, dass** die Auswerteeinheit (56) das Verbindungspunktpotential zwischen den beiden Photodioden (30) eines ersten Photodiodenpaares (36) mit einem Referenzwert vergleicht, der gleich einem bestimmten Bruchteil des Versorgungspotentials dieses ersten Photodiodenpaares (36) ist, und dass die Auswerteeinheit (56) den Einfallwinkel anhand des Überdeckungsgrades und des Abstandes (44) der Abschattungsmaske (46) von den Raumladungszonenflächen (34) zumindest eines derjenigen beiden ersten Photodiodenpaare (36) ermittelt, für die gilt, dass das Verbindungspotential des einen ersten Photodiodenpaares (36) kleiner und das Verbindungspotential des anderen ersten Photodiodenpaares (36) größer als der jeweilige Referenzwert ist.

4. Vorrichtung nach einem der Ansprüche 1 bis 3, **dadurch gekennzeichnet, dass** die Photodioden (30) der ersten Photodiodenpaare (36) im wesentlichen baugleich sind.

5. Vorrichtung nach Anspruch 3 und 4, **dadurch gekennzeichnet, dass** der Referenzwert gleich dem halben Versorgungspotential ist.

6. Vorrichtung nach einem der Ansprüche 1 bis 5, **dadurch gekennzeichnet, dass** der Mittenabstand (52) jeweils benachbarter strahlungsdurchlässiger Bereiche (48) der Abschattungsmaske (46) verschieden ist von dem Mittenabstand (40) jeweils benachbarter erster Photodiodenpaare (36).

7. Vorrichtung nach Anspruch 6, **dadurch gekennzeichnet, dass** der Mittenabstand (52) jeweils benachbarter strahlungsdurchlässiger Bereiche (48) der Abschattungsmaske (46) und der Mittenabstand (40) jeweils benachbarter erster Photodiodenpaare (36) jeweils konstant ist.

8. Vorrichtung nach einem der Ansprüche 1 bis 7, **dadurch gekennzeichnet, dass** die ersten Photodioden (30) auf einem gemeinsamen halbleitenden Substrat (16) ausgebildet sind.

9. Vorrichtung nach Anspruch 8, **dadurch gekennzeichnet, dass** die ersten Photodioden (30) durch in das Substrat (16) eingebrachte vertikale Isolationsschichten (22) elektrisch voneinander isoliert sind.

10. Vorrichtung nach Anspruch 8oder 9, **dadurch gekennzeichnet, dass** das Substrat (16) eine unterhalb der Anordnung der ersten Photodiodenpaare (36) ausgebildete horizontale Isolationsschicht (20) aufweist.

11. Vorrichtung nach Anspruch 9 und 10, **dadurch gekennzeichnet, dass** das Substrat (16) ein SOI-Substrat ist.

12. Vorrichtung nach einem der Ansprüche 1 bis 11, **dadurch gekennzeichnet, dass** eine der Anordnung der ersten Photodiodenpaare (36) gleichende Anordnung von zweiten Photodiodenpaaren entlang einer winklig zur ersten Achse verlaufenden zweiten Achse vorgesehen ist und dass die Auswerteeinheit (56) den Einfallwinkel ermittelt, unter der die parallel zur zweiten Achse gerichtete Komponente der Strahlung auf die Strahlungseinfallfläche (14) auftrifft.

13. Vorrichtung nach Anspruch 12, **dadurch gekennzeichnet, dass** die ersten und die zweiten Achsen orthogonal zueinander verlaufen.

14. Vorrichtung nach Anspruch 12 oder 13, **dadurch gekennzeichnet, dass** jeweils ein erstes und ein zweites Photodiodenpaar einem gemeinsamen strahlungsdurchlässigen Bereich (48') der Abschattungsmaske (46') zugeordnet sind.

## Claims

1. A device for detecting the angle of incidence of radiation on a radiation incidence surface, comprising:

   - at least two first pairs of photodiodes (36) comprising first photodiodes (30) arranged along a first axis (12) and connected in series in a pairwise manner,
   - each first photodiode (30) comprising a space-charge zone (32) having a space-charge zone face (34) oriented towards the radiation incidence face (14),
   - a shading mask (46) arranged at a distance (44) above the space-charge zone faces (34) of the first photodiodes (30) and comprising radiation-transmitting areas (48),
   - each radiation-transmitting area (48) being assigned to the space-charge zone faces (34) of the two first photodiodes (30) of a first pair of photodiodes (36), and,
   - when viewed in the direction of the normal of the radiation incidence face (14), the degree of overlapping between a radiation-transmitting area (48) and its assigned space-charge zone faces (34) in the direction of the first axis (12) being different for at least two of the first pairs of photodiodes (36), and
   - an evaluation unit (56) for monitoring the photocurrent and/or the photovoltage of each first photodiode (30) of each first pair of photodiodes (36) and for detecting, on the basis of a comparison of the photocurrents and/or the photovoltages, the angle of incidence under which the component of the radiation which in the projection is directed parallel to the first axis (12) impinges on the radiation incidence face (14).

2. The device according to claim 1, **characterized in that** the evaluation unit (56) monitors the potential at the connection point (62) between the first photodiodes (30) of each first pair of photodiodes (36) and/or the currents passing through the first photodiodes (30) of each first pair of photodiodes (36) and, on the basis of the change of potential at the connection point of the first pairs of photodiodes (36) and/or the change of the result of a comparison of the relative amounts of the currents passing through the first photodiodes (30) of each pair of photodiodes (36), detects the angle of incidence under which the component of the radiation which in the projection is directed parallel to the first axis (12) impinges on the radiation incidence face (14).

3. The device according to claim 1 or 2, **characterized in that** the evaluation unit (56) compares the potential at the connection point between the two photodiodes (30) of a first pair of photodiodes (36) with a reference value which is equal to a specific fraction of the supply potential of this first pair of photodiodes (36), and that the evaluation unit (56) detects the angle of incidence on the basis of a degree of the overlap and the distance (44) between the shading mask (46) and the space charge zone faces (34) of at least one pair of those first pairs of photodiodes (36) for which the connection potential of the one first pair of photodiodes (36) is smaller and the connection potential of the other first pair of photodiodes (36) is larger than the respective reference value.

4. The device according to any one of claims 1 to 3, **characterized in that** the photodiodes (30) of the first pairs of photodiodes (36) are substantially identical in design.

5. The device according to claims 3 and 4, **characterized in that** the reference value is equal to half the supply potential.

6. The device according to any one of claims 1 to 5, **characterized in that** the center-to-center distance (52) of respectively adjacent radiation-transmitting areas (48) of the shading mask (46) is different from the center-to-center distance (40) of the respectively adjacent first pairs of photodiodes (36).

7. The device according to claim 6, **characterized in that** the center-to-center distance (52) of respectively adjacent radiation-transmitting areas (48) of the shading mask (46) and the center-to-center distance (40) of respectively adjacent first pairs of photodiodes (36) are respectively constant.

8. The device according to any one of claims 1 to 7, **characterized in that** the first photodiodes (30) are formed on a common semi-conductible substrate (16).

9. The device according to claim 8, **characterized in that** the first photodiodes (30) are electrically insulated from each other by vertical insulation layers (22) inserted into the substrate (16).

10. The device according to claim 8 or 9, **characterized in that** the substrate (16) comprises a horizontal insulation layer (20) formed below the arrangement of the first pairs of photodiodes (36).

11. The device according to claims 9 and 10, **characterized in that** the substrate (16) is an SOI substrate.

12. The device according to any one of claims 1 to 11, **characterized in that** an arrangement of second pairs of photodiodes similar to the arrangement of first pairs of photodiodes (36) is provided along a second axis extending at an angle to the first axis, and that the evaluation unit (56) detects the angle of incidence under which the component of the radiation oriented parallel to the second axis is incident onto the radiation incidence surface (14).

13. The device according to claim 12, **characterized in that** the first and second axes extend orthogonally to each other.

14. The device according to claim 12 or 13, **characterized in that** respectively a first and a second pair of photodiodes are assigned to a common radiation-transmitting area (48') of the shading mask (46').

**Revendications**

1. Dispositif pour déterminer l'angle d'incidence d'un rayonnement sur une surface d'incidence du rayonnement, comprenant :

   - au moins deux premières paires de photodiodes (36) avec des premières photodiodes (30) qui sont disposées le long d'un premier axe (12) et qui sont connectées en série par paires,
   - chaque première photodiode (30) présentant une zone de charge d'espace (32) qui possède une surface de zone de charge d'espace (34) dirigée vers la surface d'incidence du rayonnement (14),
- un masque d'obscurcissement (46), disposé à une certaine distance (44) au-dessus des surfaces des zones de charge d'espace (34) des premières photodiodes (30), et présentant des régions transparentes au rayonnement (48),
- chaque région transparente au rayonnement (48) correspondant aux surfaces des zones de charge d'espace (34) des deux premières photodiodes (30) d'une première paire de photodiodes (36), et
- dans lequel, vu dans la direction de la normale à la surface d'incidence de rayonnement (14), le degré de recouvrement entre une région transparente au rayonnement (48) et les surfaces de zones de charge d'espace (34) qui lui correspondent dans la direction du premier axe (12) est différent pour au moins deux des premières paires de photodiodes (36), et
- une unité d'analyse (56) qui interroge le courant photoélectrique et/ou la tension photoélectrique de chacune des premières photodiodes (30) de chaque première paire de photodiodes (36) et, sur la base d'une comparaison des courants photoélectriques et/ou des tensions photoélectriques, détermine l'angle d'incidence sous lequel la composante du rayonnement orientée parallèlement au premier axe (12) dans la projection tombe sur la surface d'incidence de rayonnement (14).

2. Dispositif selon la revendication 1, **caractérisé en ce que** l'unité d'analyse (56) interroge le potentiel au point de connexion (62) entre les premières photodiodes (30) de chaque première paire de photodiodes (36) et/ou les courants qui traversent les premières photodiodes (30) de chaque première paire de photodiodes (36) et, sur la base de la variation du potentiel du point de connexion des premières paires de photodiodes (36) et/ou de la variation du résultat d'une comparaison des valeurs des courants qui traversent les premières photodiodes (30) de chaque paire de photodiodes (36), détermine l'angle d'incidence sous lequel la composante du rayonnement orientée parallèlement au premier axe (12) dans la projection tombe sur la surface d'incidence du rayonnement (14).

3. Dispositif selon la revendication 1 ou 2, **caractérisé en ce que** l'unité d'analyse (56) compare le potentiel du point de connexion entre les deux photodiodes (30) d'une première paire de photodiodes (36) à une valeur de référence qui est égale à une fraction donnée du potentiel d'alimentation de cette première paire de photodiodes (36), et **en ce que** l'unité d'analyse (56) détermine l'angle d'incidence sur la base du degré de recouvrement et de la distance (44) du masque d'obscurcissement (46) aux surfaces de zones de charge d'espace (34) d'au moins l'une des deux premières paires de photodiodes (36) pour lesquelles le potentiel de connexion d'une première paire de photodiodes (36) est inférieur, et le potentiel de connexion de l'autre première paire de photodiodes (36) supérieur, à la valeur de référence respective.

4. Dispositif selon l'une des revendications 1 à 3, **caractérisé en ce que** les photodiodes (30) des premières paires de photodiodes (36) sont de conception sensiblement identique.

5. Dispositif selon la revendication 3 et 4, **caractérisé en ce que** la valeur de référence est égale à la moitié du potentiel d'alimentation.

6. Dispositif selon l'une des revendications 1 à 5, **caractérisé en ce que** la distance entre centres (52) de régions transparentes au rayonnement voisines (48) du masque d'obscurcissement (46) est différente de la distance entre centres (40) de premières paires de photodiodes voisines (36).

7. Dispositif selon la revendication 6, **caractérisé en ce que** la distance entre centres (52) de régions transparentes au rayonnement voisines (48) du masque d'obscurcissement (46) et la distance entre centres (40) de premières paires de photodiodes voisines (36) sont respectivement constantes.

8. Dispositif selon l'une des revendications 1 à 7, **caractérisé en ce que** les premières photodiodes (30) sont formées sur un substrat semi-conducteur commun (16).

9. Dispositif selon la revendication 8, **caractérisé en ce que** les premières photodiodes (30) sont isolées électriquement les unes des autres par des couches d'isolation verticales (22) introduites dans le substrat (16).

10. Dispositif selon la revendication 8 et 9, **caractérisé en ce que** le substrat (16) présente une couche d'isolation horizontale (20) formée au-dessous de l'agencement des premières paires de photodiodes (36).

11. Dispositif selon la revendication 9 ou 10, **caractérisé en ce que** le substrat (16) est un substrat SOI.

12. Dispositif selon l'une des revendications 1 à 11, **caractérisé en ce qu'**il est prévu, le long d'un deuxième axe s'étendant obliquement par rapport au premier axe, un agencement de deuxièmes paires de photodiodes analogue à l'agencement des premières paires de photodiodes (36), et **en ce que** l'unité d'analyse (56) détermine l'angle d'incidence sous lequel la composante du rayonnement orientée parallèlement au deuxième axe tombe sur la surface d'incidence du rayonnement (14).

13. Dispositif selon la revendication 12, **caractérisé en ce que** le premier axe et le deuxième axe sont orientés orthogonalement l'un par rapport à l'autre.

14. Dispositif selon la revendication 12 ou 13, **caractérisé en ce qu'**une première paire et une deuxième paires de photodiodes sont associées chacune à une région transparente au rayonnement commune (48) du masque d'obscurcissement (46').

Fig.1

Fig.2

Fig.3

EP 1 357 393 B1

Fig.4

...000001111...

Fig.5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4122707 A1
- EP 0747719 A
- DE 19838460 A1
- DE 10046785 A1
- WO 0148504 A